# EUROPEAN PATENT APPLICATION

(11) **EP 1 106 297 A1**
(43) Date of publication of application: **13.06.2001**
(21) Application number: 99124431.0
(22) Date of filing: 08.12.1999
(51) Int. Cl.: B23K 11/14, B23K 26/00, B60G 7/00

(54) **Welding method for a control link using laser and apparatus for performing the same**

(71) Applicant: Korea Institute of Machinery & Materials, Taejon (KR); Central Corporation, kyungnam 641-315 (KR)
(72) Inventor: Han, Yu Hee, Taejon 305-333 (KR); Suh, Jeong, Pusanjin-Ku,Pusan,614-103 (KR); Lee, Je Hoon, Yusong-ku, Taejon 305-390 (KR); Lee, Hi Bang, Kyungnam 641-315 (KR)
(74) Representative: Sawodny, Michael-Wolfgang

(57) **Abstract**

Disclosed is a welding method for a control link and an apparatus for performing the same. A pair of rings and a rod therebetween are welded together by a projection welding and thereafter undergo a laser welding so that a notch portion formed along the weld portion is melted to form a fillet portion, thereby being improved in physical strengths thereof. For the laser welding, a laser beam generator, a beam switch box, and a focusing device are provided. The control link rotates while the laser beam is incident onto the weld portion thereof. The physical properties against tension, compression and twist are improved compared to a fillet-free case.

## Description

### Background of the Invention

### 1. Field of the Invention

The present invention relates to a welding method for a control link and an apparatus therefor, and more particularly to a welding method and an apparatus which remove a notch portion formed around a weld portion and form a fillet portion thereto, thereby improving physical characteristics thereof.

### 2. Description of the Prior Art

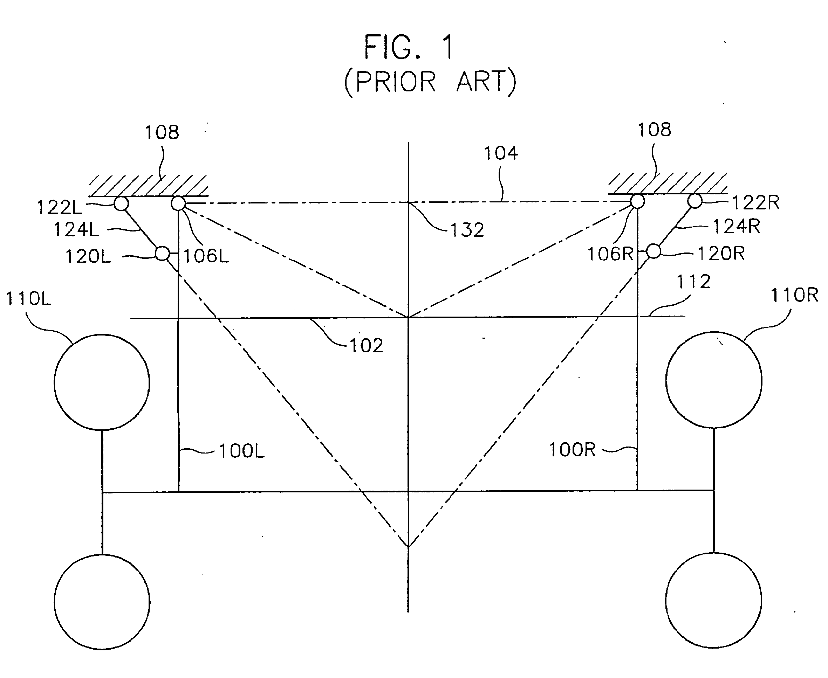

In general, a control link is provided in a suspension system of a vehicle, which vertically oscillates and absorbs any external instability in response to vibrations and impacts arisen by the instabilities. Japanese laid-open publication serial number 63-40210 discloses a twist beam type rear suspension for a vehicle. Referring to FIG. 1, the suspension includes a pair of trailing arms 100R and 100L mounted along opposite sides of the vehicle and a twisting beam 102 extending therebetween. Front ends of trailing arms 100R and 100L are pivotally supported by a vehicle body 108 through joints 106R and 106L, and define a pivot axis 104. Rear ends of trailing arms 100R and 100L support wheels 110R and 110L.

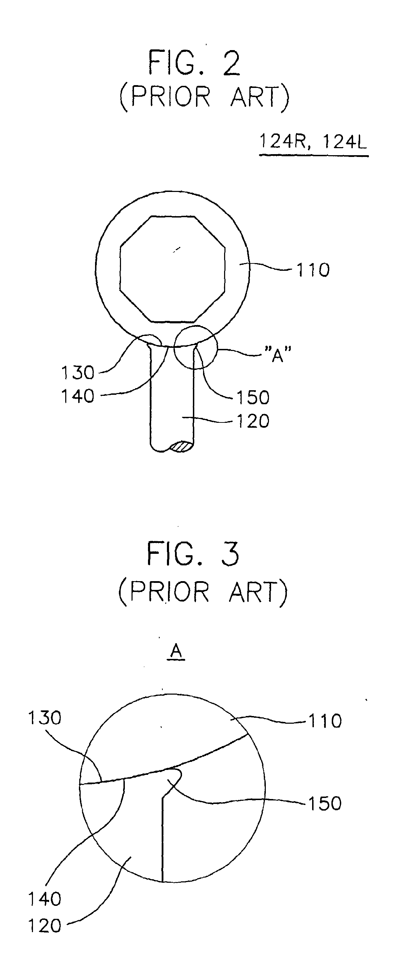

Each first ends of a pair of control links 124R and 124L are pivotally connected to each corresponding trailing arms through joints 120R and 120L, and each second ends thereof are pivotally centered about axis 104 and are connected to vehicle body 108 through joints 122R and 122L. Referring to FIG. 2, control links 124R and 124L include a pair of rings 110 (shown one side only for a better view) through which hinge pins are inserted and a rod 120 connecting rings 110. Control links 124R and 124L vertically oscillate in response to impacts occurred while the vehicle is running. Thus, the welding quality of control links 124R and 124L should be considered for design to maximize a fatigue endurance.

In general, control links 124R and 124L have been welded with a projection welding. The projection welding is a kind of resistance welding in which a projection is formed at one member to be welded with the other member having a flat surface, the two members being contacted such that the projection faces the flat surface, and a voltage is applied to them. The current is concentrated at the projection so that thermal heat is generated between the projection and the flat surface. At the same time, the two members are urged toward each other. Thus, when the temperature therebetween reaches up to a predetermined melting point, the projection collapses and adheres to the flat surface of the other member.

Hereinafter, the projection welding method for rings 110 and rod 120 of control links 124R and 124L will be explained. Firstly, one of ring 110 and rod 120 are aligned such that a first weld portion 130 formed at a side of ring 110 and a second weld portion 140 formed at a side of rod 120 face each other. Then, first and second weld portions 130 and 140 are urged to each other so as to forcibly abut. At this state, electrodes are implanted into ring 110 and rod 120, respectively, and a voltage is applied. Thermal heat is generated at first and second weld portions 130 and 140 and the temperature thereof rises up to a predetermined melting point, resulting in melting of first and second weld portions 130 and 140. At this time, ring 110 and rod 120 are forcibly abut to each other so that first and second weld portions 130 and 140 with relatively high temperature collapse and adhere to each other. The opposite side ring undergoes the same process.

FIG. 3 is an enlarged view of portion "A" shown in FIG. 2 which is a welded portion between ring 110 and rod 120 of the control links after the projection welding is done. Referring to FIGs. 2 and 3, ring 110 and rod 120 are integrally connected to each other by the projection welding. However, there formed flushes at first and second weld portions 130 and 140 centered about rod 120. Due to the flushes, when an external force acts on the control link, stresses are concentrated on the weld portions and, moreover, salt particulate can be easily landed at the weld portions and corrodes therearound, thereby breaking down the control link.

### Summary of the Invention

The present invention is intended to overcome the above described problems. Therefore, the object of the present invention is to provide a control link welding method and an apparatus therefor in which the control link is welded by the projection welding and thereafter notch portions around the weld portions are melted to form fillet portions by a laser welding thereby improves a mechanical strength of the control link.

In order to achieve the above object of the present invention, there is provided a welding method using laser for a control link having a pair of rings and a rod extending therebetween, the method comprising the steps of: a first step for applying a voltage and urging each of the rings and the rod toward each other so as to generate a thermal heat therebetween thereby melting contact portions therebetween and forcibly adhering the same; and a second step for focusing a laser beam onto the adhered portions while the control link rotating so as to melt notch portions formed around the adhered portions into fillet portions thereto.

According to a first embodiment of the present invention, the second step comprising the substeps of: rotating the control link; launching the laser beam; switching/splitting the laser beam into two paths; focusing the switched laser beam onto the adhered portions of the control link.

In accordance with the first embodiment of the present invention, each of the laser beam is incident onto each of the adhered portions at an inclined angle of 45 to 75 degrees with respect to a plane perpendicular to a rotational axis of the control link so as to deform the notch portion into a smooth fillet portion.

According to a second embodiment of the present invention, the second step comprising the substeps of: rotating two control links simultaneously; launching the laser beam; switching/splitting the laser beam into four paths; focusing each of the switched laser beam onto each of the adhered portions of the control link.

In accordance with a preferred embodiment of the present invention, each of the laser beam is incident onto each of the adhered portions at an inclined angle of 45 to 75 degrees with respect to a plane perpendicular to a rotational axis of the control link so as to deform the notch portion into a smooth fillet portion.

In order to achieve the above object of the present invention, there is also provided a welding apparatus using laser for a control link having a pair of rings and a rod extending therebetween, the apparatus comprising: a first welding part applying a voltage and urging each of the rings and the rod toward each other thereby melting contact portions therebetween and forcibly adhering the same; and a second welding part focusing a laser beam onto the adhered portions while the control link rotating so as to melt notch portions formed around the adhered portions into fillet portions thereto.

According to the first embodiment of the present invention, the second welding part includes a rotational station grabbing and rotating both of the rings of the control link, a CO₂ laser generator for launching a laser beam, at least two beam switch devices or splitters for dividing and directing the laser beam into two paths toward the control link, and at least two beam focusing device for focusing each of the switched laser beam onto each of the weld portions of the control link.

According to the second embodiment of the present invention, the second welding part includes at least two rotational stations each of which grabs and rotates each of two control links, an Nd-YAG laser generator for launching a laser beam, at least four beam switch devices or splitters for dividing and directing the laser beam into four paths toward the control links, at least four optical cables for transmitting the switched laser beam, and at least four beam focusing device for focusing each of the transmitted laser beam onto each of the weld portions of the control links.

### Brief Description of the Drawings

The above object and other advantages of the present invention will become more apparent by describing in detail preferred embodiments thereof with reference to the attached drawings in which:
FIG. 1 is a schematic diagram of a twist beam type rear suspension for a vehicle, which is disclosed in Japanese utility model laid-open serial number 63-40210;
FIG. 2 is a partial front view of a control link welded by a conventional projection welding;
FIG. 3 is an enlarged view of portion "A" shown in FIG. 2;
FIG. 4 is a schematic view of a projection welding apparatus in accordance with a preferred embodiment of the present invention;
FIG. 5 is a schematic view of a laser welding apparatus using CO₂ laser generator in accordance with a first embodiment of the present invention;
FIG. 6 is a schematic view of a laser welding apparatus using Nd-YAG laser generator in accordance with a second embodiment of the present invention;
FIG. 7 is a flow diagram of a control link welding method in accordance with the first embodiment of the present invention;
FIG. 8 is a flow diagram of a control link welding method in accordance with the second embodiment of the present invention;
FIG. 9 is a partially enlarged view for illustrating that a notch portion at a weld portion of a control link is deformed into a fillet portion by the laser welding;
FIG. 10 is a graph of a torsional torque comparing both cases each of which is a projection welding is done and is a laser welding is added;
FIG. 11 is 2D modeling of a stress distribution when a tension test is done to the control link without the fillet portion;
FIG. 12 is 2D modeling of a stress distribution when a tension test is done to the control link formed with the fillet portion;
FIG. 13 is 2D modeling of a stress distribution when a compression test is done to the control link without the fillet portion; and
FIG. 14 is 2D modeling of a stress distribution when a compression test is done to the control link formed with the fillet portion.

### Detailed Description of the Invention

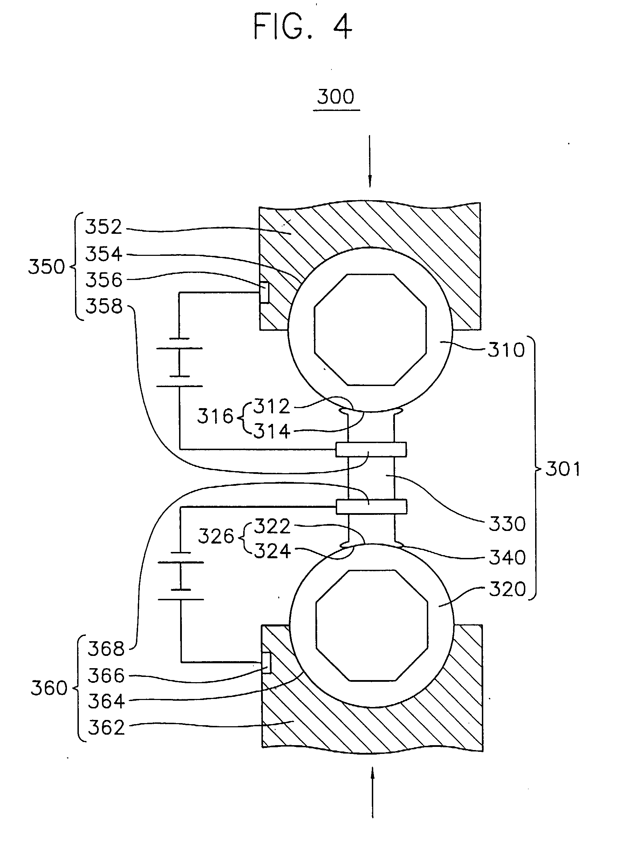

Hereinafter, a preferred embodiment of the present invention will be explained in more detail with reference to FIGs. 4 to 14.

A laser welding method and an apparatus therefor to be explained hereinafter are not substantially confined to a control link, but can be adapted altogether to a ball joint or various linkages which are underlaid repetitive loads.

In general, the control links are provided in a suspension system of a vehicle, which vertically oscillate and absorb any external instability including vibrations and impacts. FIG. 4 shows a projection welding apparatus 300 for a control link 301 in accordance with a preferred embodiment of the present invention. Referring to FIG. 4, control link 301 includes first and second rings 310 and 320 and a rod 330 extending therebetween. First ring 310 is formed at a bottom thereof with a first weld portion 312 and rod 330 is formed at one end thereof facing first weld portion 312 with a second weld portion 314. Rod 330 is formed at the other end thereof with a third weld portion 322, and second ring 320 is formed at a top portion thereof facing third weld portion 322 with a fourth weld portion 324.

Projection welding apparatus 300 includes a first electrode portion 350 for welding first ring 310 and rod 330 and a second electrode portion 360 for welding second ring 320 and rod 330. First electrode portion 350 includes a first urging portion 352 formed with a semicircular recess 354 for supporting first ring 310, a first electrode 356 connected to first urging portion 352 so as to apply a voltage to first ring 310, and a second electrode 358 connected to rod 330 so as to apply a voltage to rod 330. First electrode portion 350 urges first ring 310 downward with voltage appliance.

Second electrode portion 360 includes a second urging portion 362 formed with a semi-circular recess 364 for supporting second ring 320, a third electrode 366 connected to second urging portion 362 so as to apply a voltage to second ring 320, and a fourth electrode 368 connected to rod 330 so as to apply a voltage to rod 330. Second electrode portion 360 urges second ring 320 upward with voltage appliance.

The welding process for control link 301 with projection welding apparatus 300 is as follows. First weld portion 312 of first ring 310 is aligned to face second weld portion 314 of rod 330, and third weld portion 332 of rod 330 is aligned to face fourth weld portion 324 of second ring 320. At this moment, first ring 310 is inserted into recess 354 of first urging portion 352, and second electrode 358 is connected to a side of rod 330. Also, second ring 320 is inserted into recess 364 of second urging portion 362, and third electrode 368 is connected to a side of rod 330.

At this state, when voltage is applied to each electrode and a compression is applied to the control link, current goes through each weld portion thereby generating thermal heat. When the thermal heat reaches up to a predetermined temperature, each weld portion is plastic-deformed. With the appliance of the compression, each of the facing weld portions at a high temperature is adhered to each other integrally.

However, as mentioned above, at the weld portions of the control link, flushes are formed around the weld portions, which in turn form notch portions 340. In accordance with a preferred embodiment of the present invention, a post-treatment using laser is carried out to remove such notch portions 340.

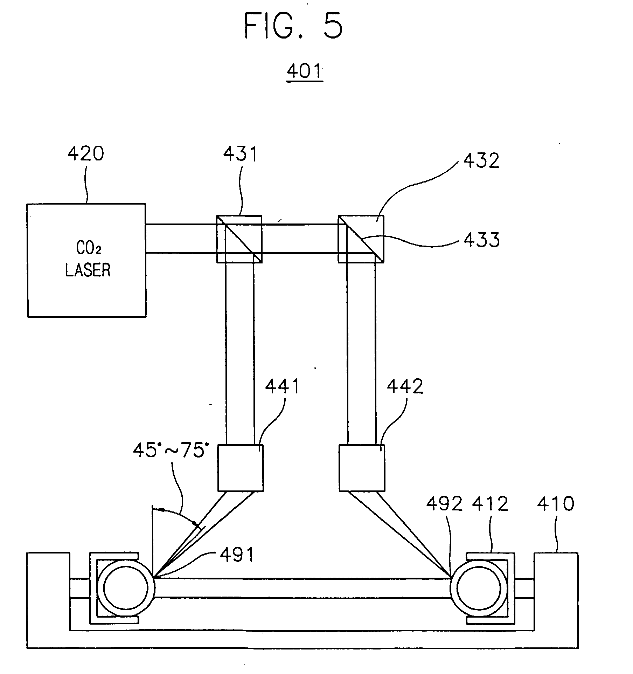

FIG. 5 shows a laser welding apparatus 401 in accordance with a first embodiment of the present invention. Referring to FIG. 5, laser welding apparatus 401 rotates control link 301 welded by the projection welding or the like. A laser beam is focused onto the weld portions of control link 301 so as to deform notch portions 340 into smooth fillet portions.

Laser welding apparatus 401 includes a rotational station 410 for rotating the control link. Rotational station 410 includes zigs 412 each of which engages each of rings 310 and 320 and rotates altogether simultaneously. A laser beam is launched from a CO₂ laser generator 420. The launched laser beam is split or switched by beam switches or splitters 431 so as to be directed toward control link 301 which is rotating on rotational station 410. That is, beam switches or splitter 431 positioned upstream encloses a half mirror which passes a part of the laser beam therethrough and switches the propagating path of the remaining beam by approximately 90 degrees. The switched beam is focused onto one of the notch portions of control link 301 through beam focusing device 441. On the other hand, downstream switch 432 includes a full mirror 433 which reflects an incident beam thereto with a reflection angle of approximately 90 degrees. The reflected beam is focused onto the other notch portion of control link 301 through beam focusing device 442.

In accordance with the first embodiment of the present invention, each of the focused laser beam is incident onto each of the adhered portions at an inclined angle of 45 to 75 degrees with respect to a plane perpendicular to a rotational axis of control link 301 so as to deform notch portions 340 into a smooth fillet portion. This makes the focused laser beam incident onto weld portions of control link 301 without any physical interference. The incident laser beam heats notch portions 340 so as to deform the same into fillet portions which are curvilinear between each of rings 310 and 320 and rod 330.

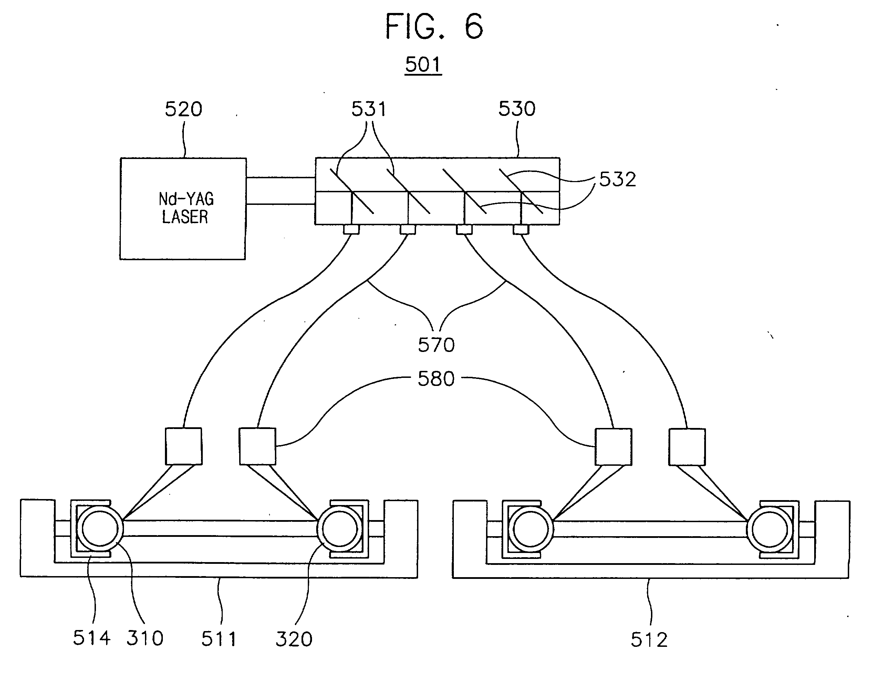

FIG. 6 shows a laser welding apparatus 501 in accordance with a second embodiment of the present invention. Referring to FIG. 6, laser welding apparatus 501 rotates at least two control links 301 welded by the projection welding or the like, and laser beams are focused onto the weld portions of control links 301 so as to deform notch portions 340 into smooth fillet portions.

Laser welding apparatus 501 includes at least two rotational stations 511 and 512 for rotating at least two control links 301. Each of rotational stations 511 and 512 includes zigs 514 each of which engages each of rings 310 and 320 and rotates altogether simultaneously. A laser beam is launched from an Nd-YAG laser generator 520. The launched laser beam is split or switched by beam switches or splitters 530 so as to be directed toward control links 301, each rotating on each rotational station 410. That is, beam switch or splitter 530 includes at least four half mirrors 531 and 532 which divide the laser beam into at least four paths with approximately equal powers and switch the propagating paths of the divided beams by approximately 90 degrees. The switched beams are transmitted through optical cables 570. Each of the transmitted beam is focused onto each of the notch portions of two control links 301 through beam focusing devices 441.

Accordingly, two control links 301 can be post-treated by the laser, resulting in a speed-up of the welding process. Alternatively, only two upstream half mirrors 531 are operated so as to post-treat one of control links 301, and thereafter, remaining two half mirrors 532 are operated to post-treat other control link 301, which means a sequential weld process. The number of control links 301 can be properly determined depending on the laser power from the Nd-YAG laser.

Also, in the second embodiment, each of the focused laser beams is incident onto each of the adhered portions at an inclined angle of 45 to 75 degrees with respect to a plane perpendicular to a rotational axis of control links 301 so as to deform notch portions 340 into smooth fillet portions. As mentioned above, the incident laser beam heats notch portions 340 so as to deform the same into fillet portions which are curvilinear between each of rings 310 and 320 and rod 330.

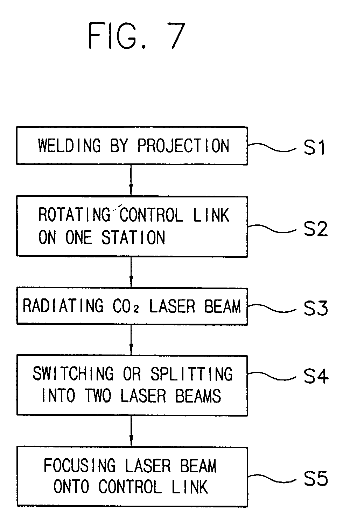

FIG. 7 describes the control link welding flow diagram in accordance with the first embodiment of the present invention. Referring to FIG. 7, a pair of rings 310 and 320 and rod 330 extending therebetween are underlaid to a voltage appliance and are urged against each other thereby being heated and adhered together by the projection welding or other welding methods (S1). Welded control link 301 rotates on rotational station 410 (S2). Thereafter, a laser beam is launched (S3), is split/switched propagating direction thereof (S4), and is focused onto the weld portions of control link 301 (S5).

In detail, the welding method of the first embodiment includes a first step (S1) for applying a voltage and urging each of rings 310 and 320 and rod 330 toward each other so as to heat-collapse contact portions therebetween and for adhering the same; and a second step for focusing laser beams onto the adhered portions while control link 301 rotating so as to melt notch portions 340 formed around the weld portions into fillet portions.

Preferably, each of the focused laser beams is incident onto each of the weld portions at an inclined angle of 45 to 75 degrees with respect to a plane perpendicular to a rotational axis of control link 301 so as to deform notch portions 340 into smooth fillet portions.

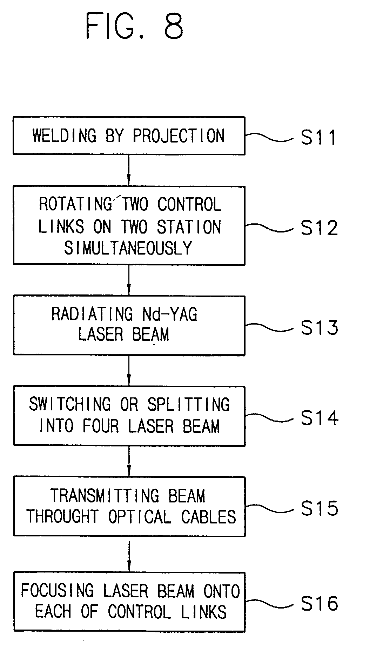

FIG. 8 describes the control link welding flow diagram in accordance with the second embodiment of the present invention. Referring to FIG. 8, a pair of rings 310 and 320 and rod 330 extending therebetween are underlaid to a voltage appliance and are urged against each other thereby being heated and adhered together by the projection welding or other welding methods (S11). Thereafter, at least two welded control links 301 rotate on the corresponding rotational stations (S12). Then, a laser beam is launched (S13), and is split/switched into four paths (S14). The split/switched laser beams are transmitted through optical cables 570 (S15), and are focused onto the corresponding weld portions of control links 301 (S16).

Preferably, each of the focused laser beams is incident onto each of the weld portions at an inclined angle of 45 to 75 degrees with respect to planes perpendicular to the rotational axis of control links 301 so as to deform notch portions 340 into smooth fillet portions.

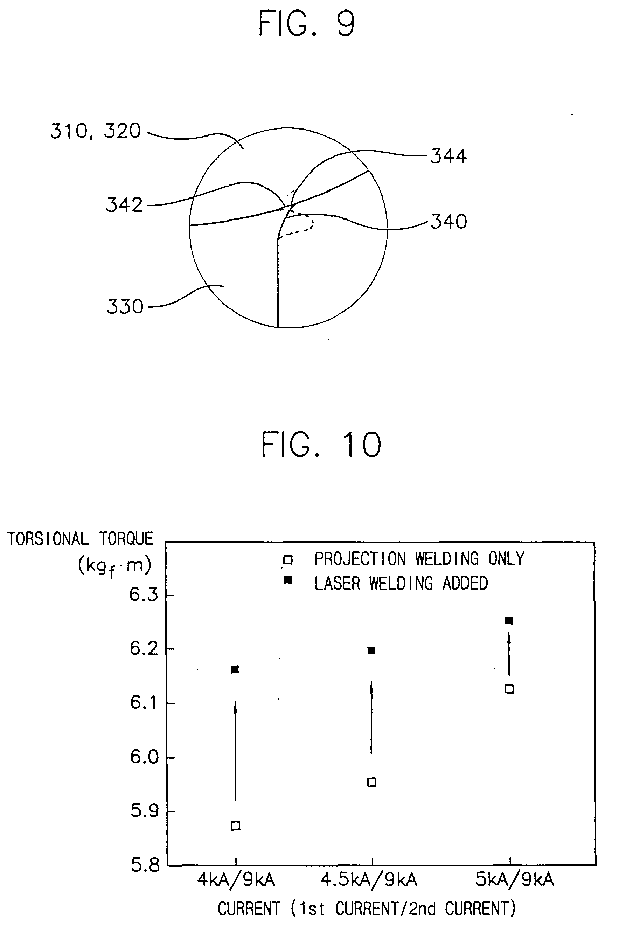

At the adhered portions focused with the laser beam, a thermal heat with a relatively high temperature is generated. When the temperature of the thermal heat rises up to a predetermined melting point, notch portions 340 formed around the adhered portions start to be melted. Accordingly, melted notch portions 340, as shown in FIG. 9, are consolidated along circumferential areas of first and second rings 310 and 320, thereby forming so called "fillets" 344.

Hereinafter, various experimental results showing improvements of the physical and mechanical strengths of the control link underlaid to the projection and post-laser treatment are explained with reference to the accompanying graphs or modelings.

FIG. 10 is a graph showing the torsional strength improvement of control link 301. Referring to FIG. 10, various first and second welding currents are applied to control link 301. It compares the torsional strengths between the ordinary projection welding case and the laser treatment added case. As is well seen in the graph, the case of added laser treatment advantageously improves the torsional strength.

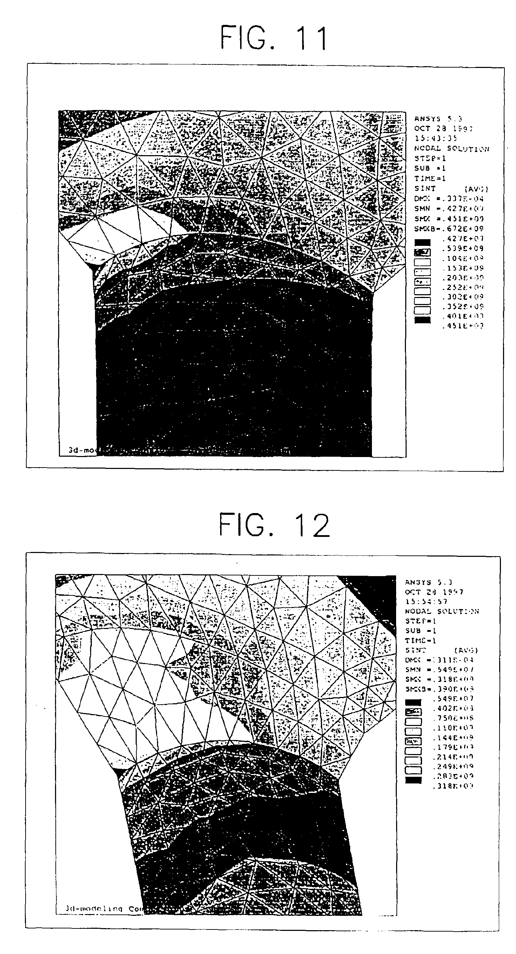

FIGs. 11 and 12 are 2D modelings of the stress distribution between the cases of the projection welding-only which forms no fillet portion and the laser welding added which forms a fillet portion along the weld portion, when a tension is applied to each case. The stress distribution is represented by shade differences. As is well known in the modelings, when the control link is done only with the projection welding, the stress is concentrated on the weld portion and its stress distribution has a steep varying ratio. In contrast, when the laser welding is added, the stress applied along the weld portion is advantageously relaxed down to 33% compared to the projection-only case, and also the stress distribution is very gentle.

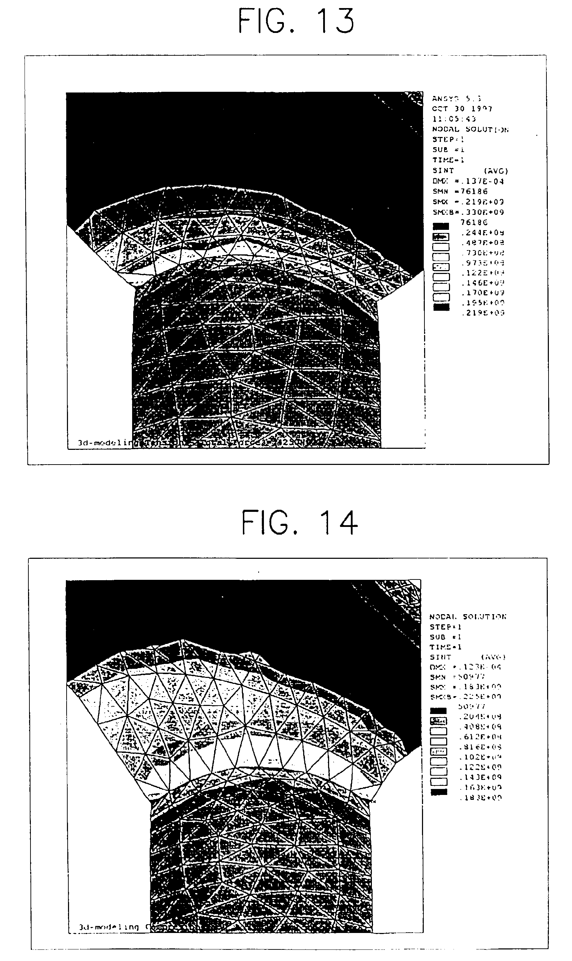

FIGs. 13 and 14 are 2D modelings of the stress distribution between the cases of the projection welding-only which forms no fillet portion and the laser welding added which forms a fillet portion along the weld portion, when a compression is applied to each case. The stress distribution is represented by shade differences. As is well known in the modellings of FIGs. 13 and 14, when the control link is done only with the projection welding, the stress is concentrated on the weld portion and its varying ratio is very steep. In contrast, when the laser welding is added, the stress applied along the weld portion is advantageously relaxed, and also the varying ratio is very gentle.

Hereinafter, another experiments have been done for figuring out the durability of the control link against a repetitive load. The experiments are done to four specimens to which different welding processes are applied, and bending fatigue strengths and torsional torques are compared with each specimen. The four specimens are indexed with A, B, C, and D respectively, as shown in Table 1.

**Table 1**

| TYPE | Welding Processes | |
|---|---|---|
| A | projection → laser → annealing | |
| B | projection → annealing | conventional |
| C | projection → annealing → laser | |
| D | projection → laser | |

As shown in Table 1, specimens A, C and D are laser welded except specimen B, and an additional annealing is done to specimens A and C.

Table 2 shows bending fatigue endurance of the specimens A, B, C and D with numerous experiments. For repetitive bending appliance, the specimens are bent by a vertical load tester (not shown) with load ±60Kgf and frequency 5Hz. The load is applied to rod 330 with one side ring of control link 301 being secured. The sequential numbers in the top row represent each 5 specimens of respective four specimen types, and the number data are cycle numbers with respect to the types and specimens.

**Table 2**

| type\No. | 1 | 2 | 3 | 4 | 5 | mean | |
|---|---|---|---|---|---|---|---|
| A | 1435 | 1450 | 1405 | 1415 | 1420 | 1425 | 167% |
| B | 840 | 865 | 850 | 870 | 840 | 853 | 100% |
| C | 1560 | 1610 | 1590 | 1570 | 1605 | 1587 | 186% |
| D | 2405 | 2420 | 2430 | 2445 | 2455 | 2431 | 285% |

As shown in Table 2, specimen D which goes through the projection welding and laser post-treatment sequentially is superior by 280% to specimen B when set as 100% in its fatigue endurance.

Table 3 shows torsional torques of the specimens A, B, C and D with a numerous experiments. The torsion is applied to one of the rings while rod 330 is secured to a control link tester. As mentioned above, the sequential numbers in the top row represent each 5 specimens of respective four specimen types.

**Table 3**

| type\No. | 1 (Kg_{f}•m) | 2 (Kg_{f}•m) | 3 (Kg_{f}•m) | 4 (Kg_{f}•m) | 5 (Kg_{f}•m) | mean (Kg_{f}•m) | |
|---|---|---|---|---|---|---|---|
| A | 8.8 | 9.2 | 9.3 | 9.0 | 8.9 | 9.00 | 108.85% |
| B | 8.0 | 8.2 | 8.4 | 8.2 | 8.5 | 8.26 | 100.00% |
| C | 9.5 | 9.4 | 9.4 | 9.3 | 9.6 | 9.44 | 114.30% |
| D | 10.4 | 10.5 | 10.5 | 10.6 | 10.6 | 10.48 | 126.70% |

As shown in Table 3, the torsional torque of specimen D which goes through the projection welding and the laser post-treatment has increased to 126.7% when the torsional torque of specimen B is set to 100%.

From the results of Tables 2 and 3, it is understood that the specimen which goes through the projection welding and the laser beam post-treatment sequentially is mostly improved in its fatigue endurance against bending and the torsional torque thereof.

Meanwhile, the specimens with additional annealing together with the laser welding are broken down at the rod thereof, not of the weld portion. This proves that the annealing weakens the physical strength of rod 330.

As described above, in accordance with a preferred embodiment of the present invention, the control link undergoes the laser welding following the projection welding so that the notch portion at the weld portion is melt and forms a fillet portion, thereby relaxing the stress concentration at the weld portion thereof and accordingly being improved in its physical and mechanical strengths when the tension, compression or twist force is applied thereto. In addition, erosion by salt through the notch portion is avoided so that the endurance against the erosion of the control link improves.

Although the preferred embodiment of the invention has been described, it is understood that the present invention should not be limited to these preferred embodiments, but various changes and modifications can be made by one skilled in the art within the spirit and scope of the invention as hereinafter claimed.

Accordingly, the welding method of the present invention can be adapted not only to the control link, but also to a ball joint or a linkage which undergoes a repetitive load.

## Claims

1. A welding method using laser for a control link having a pair of rings and a rod extending therebetween, the method comprising the steps of:
a first step for applying a voltage and urging each of the rings and the rod toward each other so as to generate a thermal heat therebetween thereby melting contact portions therebetween and adhering the rings and rod to each other; and
a second step for focusing a laser beam onto adhered portions between the rings and rod while the control link rotating so as to melt notch portions formed around the adhered portions into fillet portions.

2. The method as claimed in claim 1, wherein the second step comprises the substeps of:
rotating the control link;
launching the laser beam;
splitting the laser beam into two paths; and
focusing the splitted laser beam onto the adhered portions of the control link.

3. The method as claimed in claim 2, wherein each laser beam is incident onto each of the adhered portions at an inclined angle of 45 to 75 degrees with respect to a plane perpendicular to a rotational axis of the control link so as to deform the notch portion into a smooth fillet portion.

4. The method as claimed in claim 1, wherein the second step comprises the substeps of:
rotating two control links simultaneously;
launching the laser beam;
splitting the laser beam into four paths; and
focusing each of the switched laser beam onto each of the adhered portions of the control link.

5. The method as claimed in claim 4, wherein each laser beam is incident onto each of the adhered portions at an inclined angle of 45 to 75 degrees with respect to a plane perpendicular to a rotational axis of the control link so as to deform the notch portion into a smooth fillet portion.

6. A welding apparatus using laser for a control link having a pair of rings and a rod extending therebetween, the apparatus comprising:
a first welding part applying a voltage and urging each of the rings and the rod toward each other thereby melting contact portions therebetween and adhering the rings and rod to each other; and
a second welding part for focusing a laser beam onto adhered portions while the control link rotating so as to melt notch portions formed around the adhered portions into fillet portions.

7. The apparatus as claimed in claim 6, wherein the second welding part includes a rotational station grabbing and rotating both of the rings of the control link, a CO₂ laser beam generator for launching a laser beam, at least two beam splitters for dividing and directing the laser beam into two paths toward the control link, and at least two beam focusing device for focusing each of the splitted laser beams onto each of weld portions of the control link.

8. The apparatus as claimed in claim 7, wherein each laser beam is incident onto each of the adhered portions at an inclined angle of 45 to 75 degrees with respect to a plane perpendicular to a rotational axis of the control link so as to deform the notch portion into a smooth fillet portion.

9. The apparatus as claimed in claim 6, wherein the second welding part includes at least two rotational stations each of which grabs and rotates each of two control links, an Nd-YAG laser beam generator for launching a laser beam, at least four beam switch devices or splitters for dividing and directing the laser beam into four paths toward the control links, at least four optical cables for transmitting the switched laser beam, and at least four beam focusing devices for focusing each of the transmitted laser beam onto each of the weld portions of the control links.

10. The apparatus of as claimed in claim 9, wherein each of the laser beam is incident onto each of the adhered portions at an inclined angle of 45 to 75 degrees with respect to a plane perpendicular to a rotational axis of each of the control links so as to deform the notch portion into a smooth fillet portion.
